# EUROPÄISCHE PATENTSCHRIFT

(11) **EP 2 620 766 B1**
(45) Veröffentlichungstag und Bekanntmachung des Hinweises auf die Patenterteilung: **16.11.2016**
(21) Anmeldenummer: 12196866.3
(22) Anmeldetag: 13.12.2012
(51) Int. Cl.: G01N 31/22, F25B 41/00, G01N 19/10

(54) **Vorrichtung zur Bestimmung eines Feuchtigkeitsgehalts eines durch eine Rohrleitung strömenden Fluids**
Device for determining a moisture content of a fluid flowing through a tube
Dispositif de détermination de la teneur en humidité d'un fluide s'écoulant dans une conduite

(30) Priorität: 24.01.2012 DE 102012001383
(43) Veröffentlichungstag der Anmeldung: 31.07.2013
(73) Patentinhaber: Emerson Climate Technologies GmbH, 71332 Waiblingen (DE)
(72) Erfinder: Fuhrmann, Christian, 41569 Rommerskirchen (DE)
(74) Vertreter: Manitz, Finsterwald & Partner GbR

(56) Entgegenhaltungen:
- GB-A- 805 012
- US-A- 2 844 026
- US-A- 3 088 811
- US-A- 3 122 124
- US-A- 3 142 287
- US-A- 3 371 648

## Beschreibung

Die vorliegende Erfindung betrifft eine Vorrichtung zur Bestimmung eines Feuchtigkeitsgehalts eines durch eine Rohrleitung strömenden Fluids mit einem einen Gehäuseinnenraum definierenden Gehäuse, einem an einer ersten Seite des Gehäuses angeordneten Schauglas und einem Feuchtigkeitsindikator, der durch das Schauglas hindurch sichtbar in dem Gehäuseinnenraum angeordnet ist.

Vorrichtungen dieser Art sind grundsätzlich bekannt und werden beispielsweise in Kältemaschinen eingesetzt. Da die dort verwendeten Kältemittel hygroskopisch sind, ist das Eindringen von Feuchtigkeit in den Kältemittelkreislauf unerwünscht. Daher wird der Feuchtigkeitsgehalt des Kältemittels, d.h. dessen Wasseranteil, in Kältemaschinen überwacht. Hierzu wird in der Regel eine hygroskopische Substanz, z.B. Kobaltsalz, als Feuchtigkeitsindikator eingesetzt, deren Farbe sich mit dem Feuchtigkeitsgehalt des Kältemittels ändert.

Eine bekannte Vorrichtung der eingangs genannten Art ist so in eine Rohrleitung einer Kältemaschine integriert, dass Abschnitte der Rohrleitung an gegenüberliegenden Seiten des Gehäuses anschließen, d.h. dass die Rohrleitung gewissermaßen durch das Gehäuse hindurchführt und das Kältemittel vollständig durch die Vorrichtung hindurchströmt. Das Ablesen des Feuchtigkeitsindikators, kann sich bei dieser Vorrichtung schwierig gestalten, insbesondere dann, wenn der Feuchtigkeitsindikator eine dunkle Färbung und somit lediglich einen geringen Kontrast zu dem dunklen Gehäuseinnenraum aufweist.

Eine Vorrichtung gemäß dem Oberbegriff von Anspruch 1 ist aus der US 3,088,811 A bekannt. Vorrichtungen zur Bestimmung des Feuchtigkeitsgehalts, bei welchen ein Rohrleitungsstück integraler Bestandteil der jeweiligen Vorrichtung ist, sind in der US 2,844,026 A, der US 3,371,648 A, der US 3,122,124 A und der US 3,142,287 A offenbart. Die GB 805,012 A beschreibt die Materialzusammensetzung eines Feuchtigkeitsindikators.

Der Erfindung liegt die Aufgabe zugrunde, eine Vorrichtung zur Bestimmung des Feuchtigkeitsgehalts anzugeben, die auf einfache Weise an bestehenden Rohrleitungen nachrüstbar ist und zugleich eine gute Ablesbarkeit des Feuchtigkeitsindikators sicherstellt.

Die Aufgabe wird durch eine Vorrichtung mit den Merkmalen des Anspruchs 1 gelöst.

Die erfindungsgemäße Vorrichtung umfasst ein Gehäuse, das einen Gehäuseinnenraum definiert, ein an einer ersten Seite des Gehäuses angeordnetes Schauglas, eine Gehäuseöffnung, die an einer zweiten Seite des Gehäuses angeordnet ist, welche der ersten Seite gegenüber liegt, und die einen Eintritt des durch die Rohrleitung strömenden Fluids in den Gehäuseinnenraum ermöglicht, und einen Feuchtigkeitsindikator, der durch das Schauglas hindurch sichtbar in dem Gehäuseinnenraum angeordnet ist. Eine Abmessung der Gehäuseöffnung ist in zumindest einer Richtung kleiner als eine Abmessung des Schauglases in der gleichen Richtung. Bei der erfindungsgemäßen Vorrichtung erstreckt sich die Rohrleitung nicht durch das Gehäuse hindurch, d.h. der Gehäuseinnenraum wird nicht von dem gesamten durch die Rohrleitung strömenden Fluid durchströmt, sondern die Vorrichtung ist gewissermaßen seitlich an einer Außenseite der Rohrleitung angebracht, wobei eine Kommunikation zwischen dem Gehäuseinnenraum und dem Inneren der Rohrleitung über die an der zweiten Seite des Gehäuses angeordnete Gehäuseöffnung erfolgt.

Dies resultiert zum einen in einer verbesserten Strömung des Fluids in der Rohrleitung, da die Strömung durch die vergleichsweise kleine Gehäuseöffnung zumindest nicht wesentlich gestört wird.

Zum anderen wird aufgrund der erfindungsgemäß vorgesehenen Anordnung der Vorrichtung an der Rohrleitung und der speziellen Dimensionierung der Gehäuseöffnung im Vergleich zum Schauglas erreicht, dass sich zumindest ein Teil der zweiten Seite des Gehäuses, z.B. einer Rückwand des Gehäuses, vergleichsweise nah an dem Feuchtigkeitsindikator und an dem Schauglas befindet. Durch die zweite Gehäuseseite wird also ein vergleichsweise heller Hintergrund gebildet, welcher für einen stärkeren Kontrast zu dem Feuchtigkeitsindikator sorgt, vor welchem sich der Feuchtigkeitsindikator besser ablesen lässt.

Vorteilhafte Ausführungsformen der Erfindung sind in der Beschreibung, den Zeichnungen sowie den Unteransprüchen beschrieben.

Gemäß einer ersten Ausführungsform verläuft eine die zweite Seite des Gehäuses definierende Gehäusewand zumindest bereichsweise im Wesentlichen parallel zu dem Schauglas. Die zweite Seite weist also einen über die Fläche des Schauglases im Wesentlichen gleich bleibenden Abstand zu dem Schauglas auf, der wiederum zu einer gleichmäßigeren Helligkeit in dem Gehäuseinnenraum führt.

Gemäß einer weiteren Ausführungsform verläuft eine die zweite Seite des Gehäuses definierende Gehäusewand zumindest bereichsweise schräg zu dem Schauglas. Dies ist insofern vorteilhaft, als dass die Gehäusewand auf diese Weise für die Strömung des Kältemittels besonders günstig ausgebildet werden kann. Beispielsweise kann die die zweite Seite des Gehäuses definierende Gehäusewand zumindest bereichsweise trichterförmig zu der Gehäuseöffnung hin zulaufen.

Eine Innenseite des Gehäuses, insbesondere eine die zweite Seite definierende Gehäusewand, kann eine reflektierende Oberflächenbeschichtung aufweisen. Dadurch wird noch mehr Licht in den Gehäuseinnenraum zurückgestrahlt, was die Innenseite des Gehäuses noch heller erscheinen lässt und den Kontrast zum Feuchtigkeitsindikator erhöht und damit das Ablesen des Feuchtigkeitsindikators noch weiter erleichtert.

Die Fläche des Feuchtigkeitsindikators ist vorzugsweise kleiner als die Fläche des Schauglases. Dadurch wird erreicht, dass neben dem Feuchtigkeitsindikator auch der Gehäuseinnenraum durch das Schauglas hindurch sichtbar ist. Somit lässt sich beim Einströmen des Fluids in den Gehäuseinnenraum auch erkennen, ob sich Blasen in dem Fluid gebildet haben, welche auf unerwünschte Betriebszustände hinweisen und beispielsweise anzeigen können, dass Kältemittel fehlt oder dass Druckverluste in einem Verflüssiger auftreten.

Gemäß einer Ausführungsform kann der Feuchtigkeitsindikator an dem Schauglas befestigt sein. Dadurch werden weitere Befestigungsmittel eingespart und der Feuchtigkeitsindikator liegt direkt am Schauglas an, wodurch er besonders gut abgelesen werden kann.

Alternativ kann der Feuchtigkeitsindikator an einer Seitenwand und/oder an einer Rückwand des Gehäuses befestigt sein. Der Feuchtigkeitsindikator kann entweder direkt an der Seitenwand und/oder der Rückwand befestigt oder über Befestigungsmittel, z.B. in Form eines Dreibeins, mit dieser verbunden sein. Die Befestigungsmittel müssen dabei nicht notwendigerweise mit der Seitenwand bzw. der Rückwand verschweißt sein, sondern können in das Gehäuse eingespannt sein und den Feuchtigkeitsindikator gegen das Schauglas drücken. Ist der Feuchtigkeitsindikator z.B. mittels einer Haltevorrichtung zentral im Gehäuseinnenraum angeordnet, kann er von allen Seiten von dem Kältemittel umströmt werden.

Gemäß einer bevorzugten Ausführungsform ist die Gehäuseöffnung zentrisch bezüglich des Schauglases angeordnet. Hierdurch ergibt sich ein symmetrischer Aufbau der Vorrichtung, welcher insbesondere für den universellen Einsatz bei verschiedenen Strömungsrichtungen des Kältemittels oder bei unterschiedlichen Montagepositionen sinnvoll sein kann. Zudem ist die Vorrichtung dadurch einfacher und damit kostengünstiger herstellbar.

Alternativ ist eine exzentrische Anordnung der Gehäuseöffnung bezüglich des Schauglases oder eine gänzlich asymmetrische Ausbildung der Vorrichtung möglich, z.B. um die Gehäuseöffnung in einer Seitenwand des Gehäuses anzuordnen oder die Gehäuseöffnung mittels einer Verlängerung des Gehäuses weiter von dem Feuchtigkeitsindikator entfernt zu platzieren.

Gemäß einer weiteren Ausführungsform greift ein die Gehäuseöffnung definierender Teil des Gehäuses in eine Öffnung der Rohrleitung, insbesondere in eine durch einen Anschlussstutzen definierte Öffnung, ein. Dies vereinfacht die Montage der Vorrichtung an der Rohrleitung, da der die Gehäuseöffnung definierender Teil des Gehäuses letztlich nur in die Öffnung der Rohrleitung eingesetzt und mit der Rohrleitung dicht verbunden werden muss.

Alternativ kann ein die Gehäuseöffnung definierender Teil des Gehäuses eine Öffnung der Rohrleitung von außen umschließen, insbesondere wenn die Öffnung durch einen Anschlussstutzen der Rohrleitung definiert ist. Dabei kann der die Gehäuseöffnung definierende Teil des Gehäuses durch einen in das Gehäuseinnere umgeschlagenen Wandabschnitt gebildet sein, welcher von außen an einem Anschlussstutzen der Rohrleitung anliegt.

Nachfolgend wird die Erfindung rein beispielhaft anhand möglicher Ausführungsformen unter Bezugnahme auf die beigefügten Zeichnungen beschrieben. Es zeigen:
- Fig. 1: eine Schnittansicht einer erfindungsgemäßen Vorrichtung mit einem Schauglas und einer trichterförmig zulaufenden Gehäusewand, die in einen Anschlussstutzen einer Rohrleitung eingreift;
- Fig. 2: eine Schnittansicht einer erfindungsgemäßen Vorrichtung mit einem Schauglas und einer trichterförmig zulaufenden Gehäusewand, die in eine Öffnung einer Rohrleitung eingreift;
- Fig. 3: eine Schnittansicht einer erfindungsgemäßen Vorrichtung mit einem Schauglas und einer trichterförmig zulaufenden Gehäusewand, die einen Anschlussstutzen einer Rohrleitung von außen umgreift;
- Fig. 4: eine Schnittansicht einer erfindungsgemäßen Vorrichtung mit einem Schauglas und einer trichterförmig zulaufenden Gehäusewand, die einen Anschlussstutzen einer Rohrleitung von außen umgreift und die im Bereich des Anschlussstutzens einen nach innen umgeschlagenen Wandabschnitt aufweist;
- Fig. 5: eine Schnittansicht einer erfindungsgemäßen Vorrichtung, mit einem Schauglas und einer parallel zu dem Schauglas verlaufenden Gehäusewand, die einen Anschlussstutzen von außen umgreift.

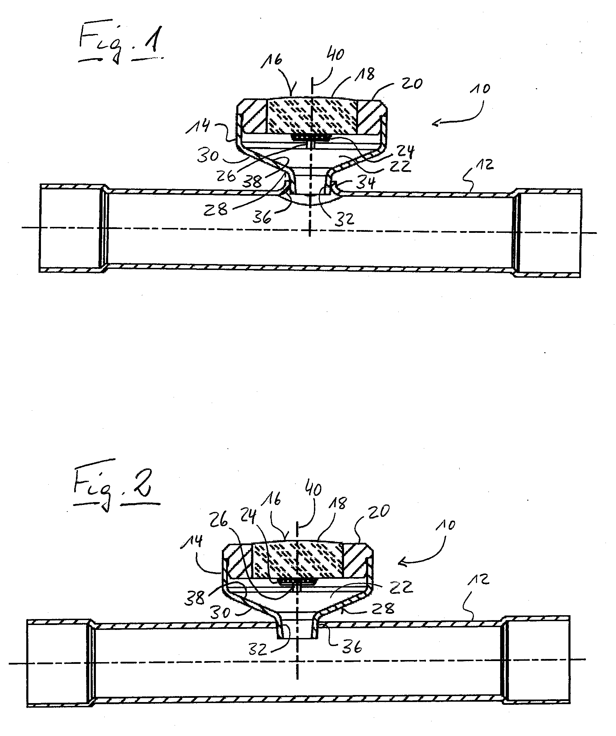

In Fig. 1 ist eine Vorrichtung 10 dargestellt, die zur Bestimmung des Feuchtigkeitsgehalts eines durch eine Rohrleitung 12 strömenden Fluids, hier eines Kältemittels einer Kältemaschine, dient.

Die Vorrichtung 10 umfasst ein Gehäuse 14 mit einem Schauglas 18 und einer Schauglaseinfassung 20, welche eine erste Gehäuseseite 16 definieren.

In einem Innenraum 22 des Gehäuses 14 befindet sich ein Feuchtigkeitsindikator 24, welcher mittels einer Feuchtigkeitsindikatorhalterung 26 an einer Gehäuserückwand 30 befestigt ist. Die Feuchtigkeitsindikatorhalterung 26 umfasst drei sich jeweils von dem Feuchtigkeitsindikator 24 zu der Gehäuserückwand 30 erstreckende Haltestege, von denen aufgrund des gewählten Schnitts in den Figuren jeweils nur einer dargestellt ist. Die Feuchtigkeitsindikatorhalterung 26 ist nicht mit der Gehäuserückwand 30 verschweißt, sondern ist zwischen dieser und dem Schauglas 18 eingespannt.

Die Gehäuserückwand 30 bildet eine zweite Gehäuseseite 28, welche der ersten Gehäuseseite 16 gegenüber liegt. Die Gehäuserückwand 30 begrenzt ferner eine Gehäuseöffnung 32, welche einen geringeren Durchmesser als das Schauglas 18 aufweist und einen Eintritt des durch die Rohrleitung 12 strömenden Fluids in den Gehäuseinnenraum 22 ermöglicht. Die Gehäuserückwand 30 läuft trichterförmig zu der Gehäuseöffnung 32 hin zu und greift in eine durch einen Anschlussstutzen 34 definierte Öffnung 36 der Rohrleitung 12 ein.

Die Gehäuserückwand 30 weist an seiner dem Gehäuseinnenraum 22 zugewandten Seite eine reflektierende Oberfläche 38 auf, welche durch das Schauglas 18 einfallendes Licht reflektiert. Die Gehäuserückwand 30 erscheint somit heller und bildet einen besseren Kontrast zu dem Feuchtigkeitsindikator 24.

Die Fläche des Feuchtigkeitsindikators 24 ist kleiner als die des Schauglases 18. Dies ermöglicht eine Sicht durch das Schauglas 18 und an dem Feuchtigkeitsindikator 24 vorbei in den Gehäuseinnenraum 22. In Verbindung mit der durch die von der Gehäuserückwand 30 bewirkten größeren Helligkeit in dem Gehäuseinnenraum 22 lassen sich auf diese Weise in dem Kältemittel eventuell auftretende Blasen leicht erkennen.

Die Vorrichtung 10 ist rotationssymmetrisch um eine zentrisch durch die Gehäuseöffnung 32 und das Schauglas 18 verlaufende Symmetrieachse 40 aufgebaut.

Strömt Kältemittel durch die Rohrleitung 12, so tritt ein Teil des Kältemittels durch die Gehäuseöffnung 32 in den Gehäuseinnenraum 22 ein und interagiert dort mit dem Feuchtigkeitsindikator 24. Der Feuchtigkeitsindikator 24 verändert bei einem Vorhandensein von Feuchtigkeit, z.B. Wasser, in dem Kältemittel seine Farbe, was durch das Schauglas 18 abgelesen werden kann. Durch das Schauglas 18 in den Gehäuseinnenraum 22 einfallendes Licht wird an der Gehäuserückwand 30 reflektiert. Diese Reflektion zusammen mit einer vergleichsweise flachen Bauweise des Gehäuses, d.h. einem vergleichsweise geringem Abstand zwischen Gehäuserückwand 30 und Schauglas 18, führt zu einer guten Ausleuchtung des Gehäuseinnenraums 22, die wiederum in einem optimalen Kontrast zwischen Feuchtigkeitsindikator 24 und Hintergrund und folglich in einer besonders zuverlässigen Bestimmung des Feuchtigkeitsgehalts des Kältemittels resultiert, mit dem zusätzlichen Vorteil der Blasendetektion.

Fig. 2 bis 5 zeigen Varianten von Vorrichtungen 10, welche der voranstehend beschriebenen Ausführungsform von Fig. 1 weitgehend entsprechen, weshalb im Folgenden nur noch auf die Unterschiede zwischen den verschiedenen Ausführungsformen eingegangen wird. Dabei werden für baulich und/oder funktional identische oder ähnliche Bauteile gleich Bezugszeichen verwendet.

Die in Fig. 2 gezeigte Vorrichtung 10 unterscheidet sich von der in Fig. 1 gezeigten Ausführungsform lediglich dadurch, dass die Rohrleitung 12 ist hier nicht mit einem Anschlussstutzen 34 für den Anschluss der Vorrichtung 10 ausgerüstet ist, sondern lediglich über eine einfache Bohrung 36 verfügt, in welche die Gehäuserückwand 30 eingreift.

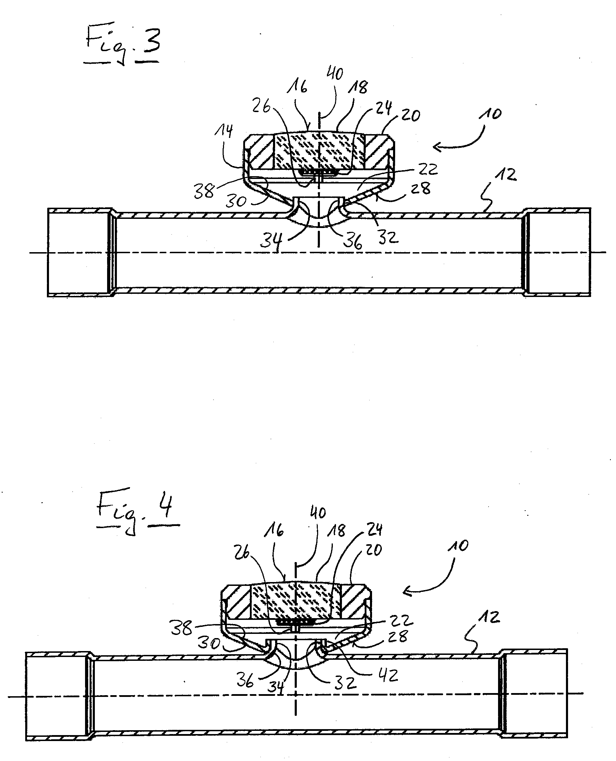

Die in Fig. 3 gezeigte Vorrichtung 10 unterscheidet sich von der in Fig. 1 gezeigten dadurch, dass ein Anschlussstutzen 34 der Rohrleitung 12 von der Gehäuserückwand 30 von außen umfasst wird. Der Anschlussstutzen 34 ragt also in den Gehäuseinnenraum 22 der Vorrichtung 10 hinein.

In Fig. 4 ist eine Vorrichtung 10 gezeigt, bei der ähnlich wie bei der Ausführungsform von Fig. 3 ein Anschlussstutzen 34 der Rohrleitung 12 von außen umfasst wird. Bei der Vorrichtung 10 von Fig. 4 weist die Gehäuserückwand 30 aber einen in das Gehäuseinnere 22 umgeschlagenen Wandabschnitt 42, welcher sich von außen an den Anschlussstutzen 34 anlegt, wodurch sich die Vorrichtung 10 leichter gegenüber der Rohrleitung 12 abdichten lässt.

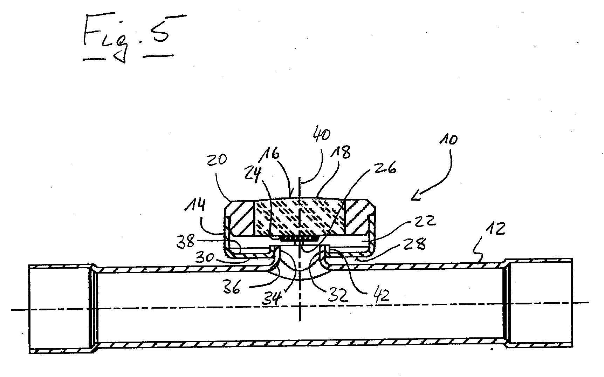

In Fig. 5 ist eine Vorrichtung 10 gezeigt, die sich von der in Fig. 4 gezeigten lediglich dadurch unterscheidet, dass die Gehäuserückwand 30 im Wesentlichen parallel zu dem Schauglas 18 verläuft. Die Gehäuserückwand 30 erstreckt sich mit anderen Worten also zumindest annähernd parallel zu der Rohrleitung 12, wodurch eine besonders kompakte Bauform der Vorrichtung 10 erreicht wird.

### Bezugszeichenliste

- 10: Vorrichtung
- 12: Rohrleitung
- 14: Gehäuse
- 16: erste Gehäuseseite
- 18: Schauglas
- 20: Schauglaseinfassung
- 22: Gehäuseinnenraum
- 24: Feuchtigkeitsindikator
- 26: Feuchtigkeitsindikatorhalterung
- 28: zweite Gehäuseseite
- 30: Gehäuserückwand
- 32: Gehäuseöffnung
- 34: Anschlussstutzen
- 36: Öffnung
- 38: Oberfläche
- 40: Symmetrieachse
- 42: Wandabschnitt

## Patentansprüche

1. Vorrichtung (10) zur Bestimmung des Feuchtigkeitsgehalts eines durch eine Rohrleitung (12) strömenden Fluids, insbesondere eines Kältemittels einer Kältemaschine, mit
einem Gehäuse (14), das einen Gehäuseinnenraum (22) definiert,
einem an einer ersten Seite (16) des Gehäuses (14) angeordneten Schauglas (18), und
einem Feuchtigkeitsindikator (24), der durch das Schauglas (18) hindurch sichtbar in dem Gehäuseinnenraum (22) angeordnet ist,
**dadurch gekennzeichnet, dass**
das Gehäuse (14) eine Gehäuseöffnung (32) aufweist, die an einer zweiten Seite (28) des Gehäuses (14) angeordnet ist, welche der ersten Seite (16) gegenüber liegt, und die einen Eintritt des durch die Rohrleitung (12) strömenden Fluids in den Gehäuseinnenraum (22) ermöglicht, wenn das Gehäuse (14) seitlich an einer Außenseite der Rohrleitung (12) angebracht ist,
wobei eine Abmessung der Gehäuseöffnung (32) in zumindest einer Richtung kleiner ist als eine Abmessung des Schauglases (18) in der gleichen Richtung.

2. Vorrichtung (10) nach Anspruch 1,
**dadurch gekennzeichnet, dass** eine die zweite Seite (28) des Gehäuses (14) definierende Gehäusewand (30) zumindest bereichsweise im Wesentlichen parallel zu dem Schauglas (18) verläuft.

3. Vorrichtung (10) nach Anspruch 1 oder 2,
**dadurch gekennzeichnet, dass** eine die zweite Seite (28) des Gehäuses (14) definierende Gehäusewand (30) zumindest bereichsweise schräg zu dem Schauglas (18) verläuft.

4. Vorrichtung (10) nach einem der vorstehenden Ansprüche,
**dadurch gekennzeichnet, dass**
eine die zweite Seite (28) des Gehäuses (14) definierende Gehäusewand (30) zumindest bereichsweise trichterförmig zu der Gehäuseöffnung (32) hin zuläuft.

5. Vorrichtung (10) nach einem der vorstehenden Ansprüche,
**dadurch gekennzeichnet, dass**
die Fläche des Feuchtigkeitsindikators (24) kleiner ist als die Fläche des Schauglases (18).

6. Vorrichtung (10) nach einem der vorstehenden Ansprüche,
**dadurch gekennzeichnet, dass**
der Feuchtigkeitsindikator (24) an dem Schauglas (18) befestigt ist.

7. Vorrichtung (10) nach einem der Ansprüche 1 bis 5,
**dadurch gekennzeichnet, dass**
der Feuchtigkeitsindikator (24) an einer Seitenwand und/ oder einer Rückwand des Gehäuses (14) befestigt ist, insbesondere mittels einer sich an der Seitenwand und/oder der Rückwand abstützenden Halterung (26).

8. Vorrichtung (10) nach einem der vorstehenden Ansprüche,
**dadurch gekennzeichnet, dass**
die Gehäuseöffnung (32) zentrisch bezüglich des Schauglases (18) angeordnet ist.

9. Vorrichtung (10) nach einem der vorstehenden Ansprüche,
**dadurch gekennzeichnet, dass**
ein die Gehäuseöffnung (32) definierender Teil des Gehäuses (14) in eine Öffnung (36) der Rohrleitung (12) eingreift.

10. Vorrichtung (10) nach einem der Ansprüche 1 bis 8,
**dadurch gekennzeichnet, dass**
ein die Gehäuseöffnung (32) definierender Teil des Gehäuses (14) eine Öffnung (36) der Rohrleitung (12), von außen umschließt.

11. Vorrichtung (10) nach Anspruch 10,
**dadurch gekennzeichnet, dass**
der die Gehäuseöffnung (32) definierende Teil des Gehäuses (14) durch einen in das Gehäuseinnere (22) umgeschlagenen Wandabschnitt (42) gebildet ist, welcher von außen an einem Anschlussstutzen (34) der Rohrleitung (12) anliegt.

## Claims

1. An apparatus (10) for determining the moisture content of a fluid flowing through a pipe line (12), in particular of a refrigerant of a refrigeration machine, comprising
a housing (14) which defines an inner housing space (22);
a sight glass (18) arranged at a first side (16) of the housing (14); and
a moisture indicator (24) which is arranged in the inner housing space (22) visible through the sight glass (18),
**characterized in that**
the housing (14) has a housing opening (32) which is arranged at a second side (28) of the housing (14), which is disposed opposite the first side (16) and which allows an entry of the fluid flowing through the pipe line (12) into the inner housing space (22) when the housing (14) is laterally attached to an outer side of the pipe line (12),
with a dimension of the housing opening (32) being smaller in at least one direction than a dimension of the sight glass (18) in the same direction.

2. An apparatus (10) in accordance with claim 1,
**characterized in that**
a housing wall (30) defining the second side (28) of the housing (14) extends at least regionally substantially parallel with the sight glass (18).

3. An apparatus (10) in accordance with claim 1 or claim 2,
**characterized in that**
a housing wall (30) defining the second side (28) of the housing (14) extends at least regionally obliquely to the sight glass (18).

4. An apparatus (10) in accordance with any one of the preceding claims,
**characterized in that**
a housing wall (30) defining the second side (28) of the housing (14) converges at least regionally toward the housing opening (32) in the manner of a funnel.

5. An apparatus (10) in accordance with any one of the preceding claims,
**characterized in that**
the surface of the moisture indicator (24) is smaller than the surface of the sight glass (18).

6. An apparatus (10) in accordance with any one of the preceding claims,
**characterized in that**
the moisture indicator (24) is fastened to the sight glass (18).

7. An apparatus (10) in accordance with any one of the claims 1 to 5, **characterized in that**
the moisture indicator (24) is fastened to a side wall and/or to a rear wall of the housing (14), in particular by means of a holder (26) supported at the side wall and/or at the rear wall.

8. An apparatus (10) in accordance with any one of the preceding claims,
**characterized in that**
the housing opening (32) is arranged centrally with respect to the sight glass (18).

9. An apparatus (10) in accordance with any one of the preceding claims,
**characterized in that**
a part of the housing (14) defining the housing opening (32) engages into an opening (36) of the pipe line (12).

10. An apparatus (10) in accordance with any one of the claims 1 to 8, **characterized in that**
a part of the housing (14) defining the housing opening (32) surrounds an opening (36) of the pipe line (12) from the outside.

11. An apparatus (10) in accordance with claim 10,
**characterized in that**
the part of the housing (14) defining the housing opening (32) is formed by a wall section (42) which is folded over into the housing interior (22) and which contacts a connector stub (34) of the pipe line (12) from the outside.

## Revendications

1. Dispositif (10) de détermination de la teneur en humidité d'un fluide s'écoulant à travers une conduite (12), en particulier d'un réfrigérant d'une machine frigorifique, comportant
un boîtier (14) qui définit un volume intérieur (22) du boîtier,
une vitre d'observation (18) agencée sur un premier côté (16) du boîtier (14), et
un indicateur d'humidité (24) agencé dans le volume intérieur (22) du boîtier en étant visible à travers la vitre d'observation (18),
**caractérisé en ce que**
le boîtier (14) présente une ouverture (32) qui est disposée sur un second coté (28) du boîtier (14) opposé au premier côté (16) et qui permet une entrée du fluide traversant la conduite (12) dans le volume intérieur (22) du boîtier, lorsque le boîtier (14) est agencé latéralement sur un côté extérieur de la conduite (12),
dans lequel une dimension de l'ouverture de boitier (32) dans au moins une direction est inférieure à une dimension de la vitre d'observation (18) dans la même direction.

2. Dispositif (10) selon la revendication 1,
**caractérisé en ce que**
une paroi de boîtier (30) définissant le second côté (28) du boîtier (14) s'étend au moins localement sensiblement parallèlement à la vitre d'observation (18).

3. Dispositif (10) selon la revendication 1 ou 2,
**caractérisé en ce que**
la paroi de boîtier (30) définissant le second côté (28) du boîtier (14) s'étend au moins localement en oblique par rapport à la vitre d'observation (18).

4. Dispositif (10) selon l'une des revendications précédentes, **caractérisé en ce que**
la paroi de boîtier (30) définissant le second côté (28) du boîtier (14) s'étend au moins localement en forme d'entonnoir vers l'ouverture de boîtier (32).

5. Dispositif (10) selon l'une des revendications précédentes, **caractérisé en ce que**
la surface de l'indicateur d'humidité (24) est plus petite que la surface de la vitre d'observation (18).

6. Dispositif (10) selon l'une des revendications précédentes,
**caractérisé en ce que**
l'indicateur d'humidité (24) est fixé sur la vitre d'observation (18).

7. Dispositif (10) selon l'une des revendications 1 à 5,
**caractérisé en ce que**
l'indicateur d'humidité (24) est fixé sur une paroi latérale et/ou sur une paroi arrière du boîtier (14), en particulier au moyen d'une monture (26) qui prend appui contre la paroi latérale et/ou contre la paroi arrière.

8. Dispositif (10) selon l'une des revendications précédentes,
**caractérisé en ce que**
l'ouverture de boîtier (32) est disposée au centre par rapport à la vitre d'observation (18).

9. Dispositif (10) selon l'une des revendications précédentes,
**caractérisé en ce que**
une partie du boîtier (14) définissant l'ouverture de boîtier (32) vient s'engager dans une ouverture (36) de la conduite (12).

10. Dispositif (10) selon l'une des revendications 1 à 8,
**caractérisé en ce que**
une partie du boîtier (14) définissant l'ouverture de boîtier (32) entoure de l'extérieur une ouverture (36) de la conduite (12).

11. Dispositif (10) selon la revendication 10,
**caractérisé en ce que**
la partie du boîtier (14) définissant l'ouverture de boîtier (32) est formée par une portion de paroi (42) qui est rabattue dans l'intérieur (22) du boîtier et qui prend appui de l'extérieur contre un manchon de raccordement (34) de la conduite (12).
